# EUROPEAN PATENT SPECIFICATION

(11) **EP 0 832 030 B1**
(45) Date of publication and mention of the grant of the patent: **31.03.1999**
(21) Application number: 96919922.3
(22) Date of filing: 29.05.1996
(51) Int. Cl.: B62M 3/08

(54) **STANDS FOR WHEELED VEHICLES**
STÄNDER ZUM EINSTELLEN VON ZWEIRÄDERN
SUPPORTS POUR VEHICULES A ROUES

(30) Priority: 01.06.1995 GB 9511047; 31.08.1995 GB 9517756
(43) Date of publication of application: 01.04.1998
(73) Proprietor: JA Promotions Limited, Merstham, Surrey RH1 3EG (GB)
(72) Inventor: CHILDS, John Winston, East Sussex TN38 9SA (GB); FRY, Alan Valentine, Rotherfield, East Sussex TN6 3QS (GB)
(74) Representative: Fry, Alan Valentine
(86) International application number: GB9601276
(87) International publication number: WO9638336

(56) References cited:
- DE-A- 3 520 765
- GB-A- 767 553
- US-A- 3 430 983

## Description

This invention relates to stands for wheeled vehicles. More especially the invention relates to stands for supporting two-wheeled vehicles such as and motor cycles in an upright position.

Motorcycles and other two-wheeled vehicles are conventionally supported when stationary by a pivotably mounted arm secured to the vehicle frame and pivotal to a position in which the free end of the arm engages the ground. When so supported, the vehicle is inclined and relies solely upon the pivoted arm for support. If the arm or ground against which the arms bears moves, the motorcycle will fall and almost certainly sustain damage. Devices having wheel engaging shaped arms or plates between which the front wheel of a two-wheeled vehicle can be positioned for support purposes are known, an example of such a device being disclosed in EP-A-0111352. The shaped arms or plates are normally secured to a fixed post and are designed to support a particular wheel or tyre size. Also, the support provided by these devices is not overly efficient and even limited movement of a supported vehicle is likely to cause the vehicle to fall over.

Stands for motorcycles and bicycles which include pivotally mounted arcuate holding rails are disclosed in GB-A-767553. These holding rails are arcuate and of 'U' shaped cross-section. This shape imposes a severe limit on the diameter and thickness of tyre or wheel which can be supported within the stand.

The present invention provides an improved stand for two-wheeled vehicles which overcomes, or at least alleviates, many of the problems associated with the devices discussed above.

When transporting motorcycles, support is conventionally provided simply by securing the vehicles to a rail of a transporting vehicle, often with adjacent vehicles in contact with one another. Sometimes motorcycles are transported in crates, often with their wheels removed. In either case, severe damage to motorcycles can occur when loading, during transit or when unloading.

The present invention provides a stand for two-wheeled vehicles suitable for use when transporting vehicles which overcomes or at least alleviates the transport problems discussed above.

Recovery of motorcycles damaged in, for example, road accidents is conventionally achieved simply by loading the damaged vehicles by means of an inclined ramp onto a conventional pick-up truck. Loading of an undamaged vehicle in this way is difficult. However, if the vehicle has sustained damage to one or both of its wheels, loading is seriously impaired. Towing assemblies for motorcycles are disclosed in US-PS-3430983 and US-PS-5352083. In the former document a trailer hitch is described having wheel engaging linearly curved shoes which engage the periphery of the tyre of the motorcycle's front wheel. The forwardmost shoe is fixed to a post (but can be moved towards and away from the vehicle tyre to lock the tyre in place) and the rear shoe is mounted for pivotal movement about a pin. The shaping of these shoes is such that only one or a very limited range of tyre diameters can be accommodated within the shoes if the required tyre contact is to be achieved. US-PS-5352083 discloses a towing truck which includes a wheel lift having rotatable tyre braces to assist loading of a towed vehicle and to provide firm support of the vehicle's tyres during towing.

The present invention provides an improved stand for two-wheeled vehicles suitable for aiding the recovery of damaged vehicles which overcomes or at least alleviates many of the problems associated with the devices disclosed in the above discussed two documents.

According to the present invention in one aspect there is provided a stand for a wheeled vehicle, the stand including a frame having a first open-end wheel engagement shoe pivotably mounted about a laterally extending pivot axis and a second wheel engagement shoe spaced from said first shoe in the intended direction of movement of a wheel into the stand, each shoe having spaced upstanding side walls each of which comprises facets which in said intended direction of movement, are sequentially inclined away from and towards the longitudinal centre line of the respective shoe, and which are also inclined away from a notional vertical plane which includes the longitudinal centre line of the shoe.

The invention will now be described by way of example only with reference to the accompanying diagrammatic drawings in which:-
Figure 1 is a side view in perspective of a stand in accordance with the invention;
Figures 2 and 3 are side views of the stand illustrated in Figure 1 before and after entry of the vehicle wheel into the stand;
Figure 4 is a front view to an enlarged scale of a detail of the stand shown in Figures 2 and 3;
Figures 5 to 7 are respectively front, side and plan views from above of a wheel engagement shoe of the stand shown in Figure 4;
Figure 8 is a plan view from above of a steel sheet from which the wheel engagement shoe of Figures 5 to 7 is produced;
Figure 9 is a plan view from above partly in section of a further stand in accordance with the invention; and
Figures 10 and 11 are side and schematic plan views of an alternative stand in accordance with the invention.

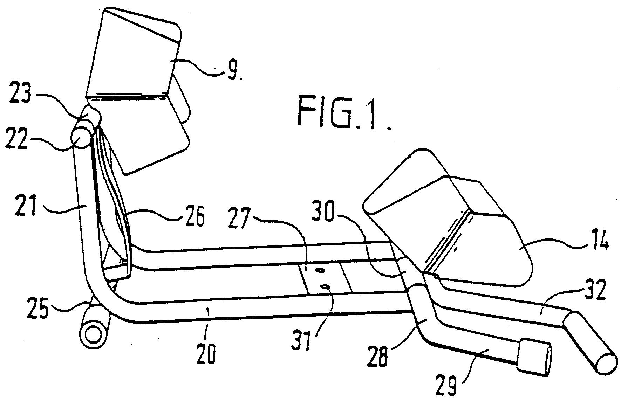

The stand shown in Figure 1 comprises a tubular steel frame including a ground engaging base defined by a pair of tubes 20 bent through substantially 90° to define upstanding arms 21 which support a tubular cross-member 22. The cross-member is welded to the upper ends of the arms 21 and carries a coaxial tube 23 to which is secured a wheel engagement shoe 9. The tube 23 is free to rotate about the surface of the cross-member 22.

A tubular cross-member 25 is secured to the lower ends of the upstanding arms 21 and has welded to it one end of a leaf spring 26. The free end of this leaf spring 26 lies behind the rear surface of the wheel engaging member 9 and operates to urge the member 9 into engagement with the tyre of a wheel when in use.

The tubes 20 are joined by a central cross-piece 27 and at their ends remote from the upstanding arms 21 by a rear tubular cross-piece 28 having rearwardly extending feet 29. The length of these feet can be varied to provide greater or less stability for the stand. The rear cross-piece 28 carries a coaxial tube 30 to which is secured a second wheel engagement member 14. The tube 30 is freely rotatable about the periphery of the rear cross-piece 28.

The central cross-piece 27 has holes 31 to enable the stand to be secured to the surface on which it sits.

Secured to the engagement shoe 14 is a foot operated lever 32 for moving the shoe 9 about the cross-piece 28. The lever 32 pivots with the shoe.

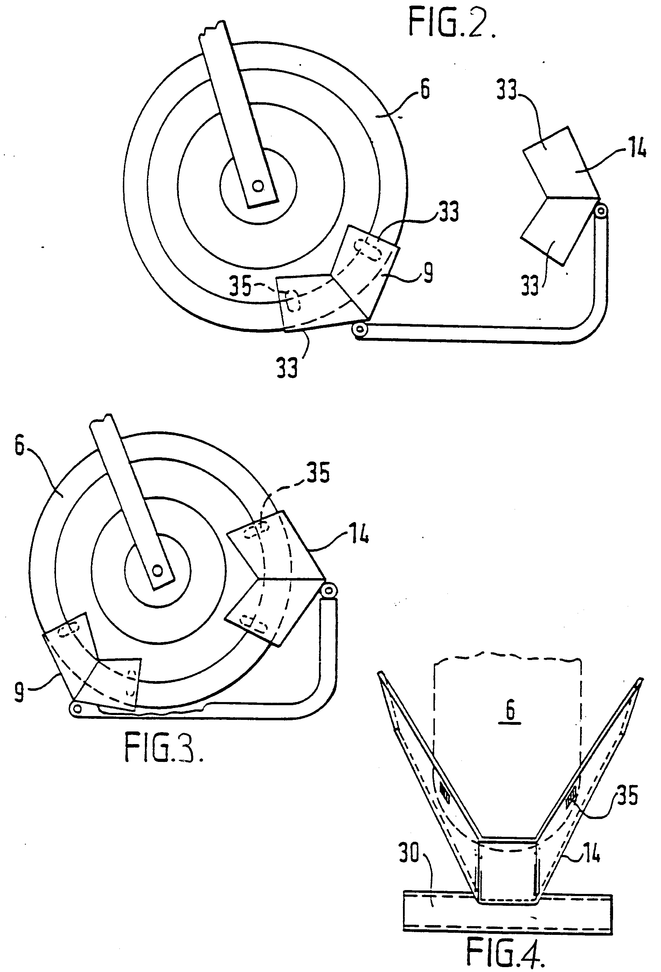

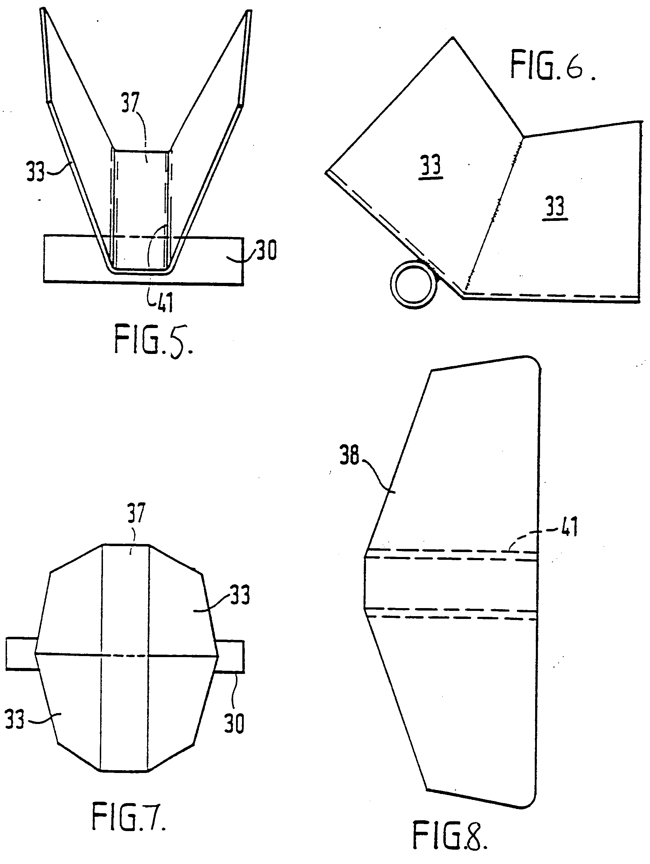

As will be seen from Figure 2, as a wheel 6 of a motor cycle enters the mouth of the engagement shoe 9, its tyre comes into contact with the side walls of the engagement shoe. Each side wall comprises two sheet steel facets 33. The contact areas are indicated in Figures 2 to 4 by chain-dotted lines reference of 35 and will be discussed in greater detail below. As shown, two contact areas 35 are present on each side wall of the engagement shoe, that is to say one contact area for each facet 33. As will be seen from Figure 4, continued forward movement of the wheel causes the engagement shoe 9 to pivot. At this juncture, the wheel 6 is carried forwardly and downwardly in an arcuate movement about the pivot axis of the shoe 9. The leading periphery of the tyre is captured by the shoe 14 and the four areas contact 35 between the shoe 14 and the tyre are made. The actual location of these areas of contact will depend upon the diameter and cross-sectional width of the tyre taken at rest, the bottom of the tyre is spaced from the floor of the shoe 14. Thus, the weight of the bike acts on the clamping frame which secures the wheel 6. The shoe 9 operates in the same way, the bottom of the tyre being spaced from the floor of the shoe. The pivot centres of shoes 9, 14 are set to accommodate all known current motor cycle front tyre diameters. Also, the width of the shoes 9,14 are set to accommodate the widths of all current motor cycle tyres. The pivot centre dimensions and shoe widths may be varied to accommodate other ranges of tyre diameters and widths.

The wheel is now held firmly within the stand and the vehicle can only be removed from the stand by downward pressure or the now raised foot operated lever 32 and by simultaneously pulling the vehicle away from the stand.

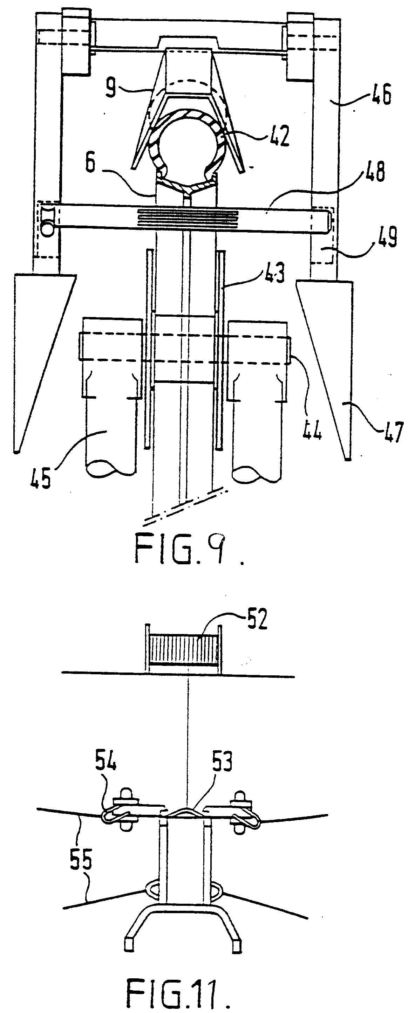

The wheel engagement shoes 9, 14 are illustrated in greater detail in Figures 5 to 8. Each wheel engagement shoe comprises two separately formed identical or closely similar plate sections which, when folded, are butt welded together. When folded, each plate section has two outwardly inclined facets 33 and a floor 37. A plate section 36 prior to folding is illustrated in Figure 8, the fold lines being indicated by broken lines 41. Once folded to provide an angle inclined to the vertical which is selected to ensure that the constructed engagement shoe will accept a required wide range of wheel and tyre sizes, two folded sections 36 are welded along the irrespective inclined edges 38 to produce an engagement shoe having a floor and four angled facets 33 which, in use, together make contact with the profile of any wheel or tyre within the selected wide size range at the four separate and generally symmetrical contact areas 35 discussed above. As will be discussed below, welding of the folded plates along their respective inclined edges 38 compounds the angle extended by each facet 33 so that each is not only inclined outwardly but also away from the centre line of the shoe. In this way, the clamping forces applied by each engagement shoe are evenly distributed over a relatively wide area. With both engagement shoes in contact with a vehicle tyre, eight contact areas 35 (one for each facet) are provided.

As will be seen from Figure 5, each facet 33 lies in a plane which is inclined at an angle to a vertical plane passing through the respective fold line 41 with the shoe base and which is also inclined at an angle with respect to the longitudinal axis of the shoe. These angles are compounded through an angle subtended between the floor sections 37 of the two welded pieces which make up the shoe.

This construction ensures that a motorcycle wheel is positioned within the stand is held firmly in place with the wheel held upright and substantially vertical, these being eight firm contact areas 35 between the tyre or wheel and the inclined sides of the shoe 9 or 14.

Turning now to Figure 9, the illustrated stand includes a locking mechanism for securing a wheel of a motorcycle positioned in the stand. For ease of understanding, similar parts to the discussed above have the same reference numerals.

The wheel 6, tyre 42, brake discs 43, wheel spindle 44 and front fork legs 45 of a motorcycle positioned within the stand are shown in Figure 9. The stand includes two side arms 46 which carry shield plates 47 which, in use of the stand, mask the wheel spindle 44. The side arms 46, may be formed from carbon steel plate and the shield plates from mild steel plate. Extending between the side arms and through the wheel 6 is a solid round locking bar 46 formed from, for example, a carbon steel. The central section of the locking bar 48 may be undercut to accommodate a plastics sleeve to prevent damage to the wheel rim. Each side arm 46 is formed with an elongate recess 49 open on one side and closed at its outer side, the security bar being introduced through the openings and then moved into the closed section for locking using, for example, a compact straight pin high security shackle lock, fitted with a unique key and locking mechanism (not shown). An alarm (e.g. a trembler alarm) activated by movement of the locking bar 48 may be provided.

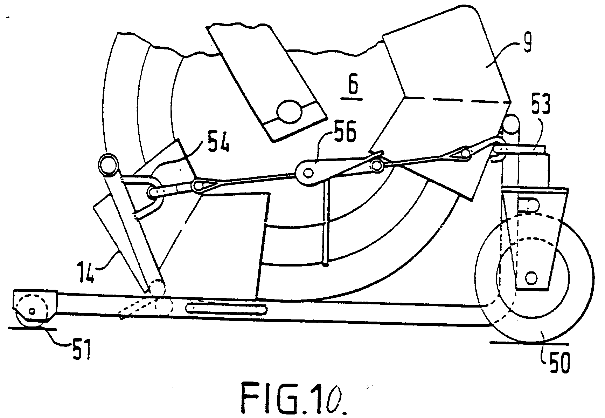

The stand illustrated in Figures 10 and 11 is of particular use for recovering and transporting motor cycles. For ease of understanding, similar parts to those discussed above have the same reference numerals. As will be seen from Figure 10, the stand is supported on front and rear wheels 50, 51, and is able, therefore, to be attached to a winch 52 of a recovery vehicle for loading onto that vehicle. A towing loop 53 is secured to the front of the frame is provided for this purpose. Further loops 54 are provided to receive securing ties 55 attached to a motor cycle supported by the stand. Once loaded, additional ties may be provided. Ratchets 56 for tightening the ties may be provided.

Stands in accordance with this invention may be fixed to the floor of a trailer for transporting motor cycles from one location to another. Thus, the wheel engagement members described above can readily be incorporated into a trailer as disclosed in corresponding International Patent Application PCT/GB94/01380.

It will be appreciated that the apparatus described above is exemplary of stands in accordance with the invention and that modifications can readily be made thereto without departing from the true scope of the invention as set out in the appended claims.

## Claims

1. A stand for a wheeled vehicle, the stand including a frame having a first open-end wheel engagement shoe (9) pivotably mounted about a laterally extending pivot axis and a second wheel engagement shoe (14) spaced from said first shoe in the intended direction of movement of a wheel (6) into the stand, the stand being characterised in that each shoe (9, 14) having spaced upstanding side walls each of which comprises facets (33) which in said intended direction of movement, are sequentially inclined away from and towards the longitudinal centre line of the respective shoe, and which are also inclined away from a notional vertical plane which includes the longitudinal centre line of the shoe.

2. A stand as claimed in Claim 1 wherein the lower margins of the facets (33) of each side wall of said first open-ended shoe (9) are inclined one with respect to the other, the lower margin of the leading facet in the said direction of movement being inclined downwardly towards said pivot axis and the lower margin of the trailing facet being inclined upwardly away from said pivot axis.

3. A stand as claimed in Claim 1 or Claim 2 wherein each shoe (9, 14) comprises first and second channel-section members whose sides are defined by said facets.

4. A stand as claimed in Claim 3 wherein each shoe (9, 14) is formed from a pair of steel sheets each having a central generally rectangular section and two side sections extending outwardly from the rectangular section, one edge of each side section being inclined at an angle to said rectangular section, each channel section member being formed by folding the respective steel sheet along the longer sides of the generally rectangular section and welding the two so formed channel sections together along their inclined edges.

5. A stand as claimed in any one of Claims 1 to 4 wherein the first wheel engagement shoe (9) includes a sleeve (23) mounted for rotation about a rod (22) secured to the frame and extending laterally thereto, the rod (22) defining the pivot axis for the first wheel engagement shoe.

6. A stand as claimed in any one of Claims 1 to 5 wherein the second wheel engagement shoe is pivotably mounted about a rod secured to the frame and extending laterally thereof, the rod defining a pivot axis for the second wheel engagement shoe.

7. A stand as claimed in Claim 6 further comprising a spring (26) operable to urge the second wheel engagement shoe (14) into contact with a wheel (6) captured within that shoe.

8. A stand as claimed in any one of the preceding Claims further comprising side pieces (47) which extend rearwardly from the front of the stand and overlie the axle of a wheel captured by the wheel engagement shoes of the stand, and means (48) for locking said wheel to said side pieces.

9. A stand as claimed in Claim 8 wherein said locking means comprises a laterally extending bar (48) secured to each side piece.

10. A stand as claimed in any one of Claims 1 to 7 further comprising ground engaging wheels (50, 51) secured to the front and rear of the stand.

11. A stand as claimed in Claim 10 further comprising attachment means for connecting the wheel-mounted stand to a cable of a winch.

## Patentansprüche

1. Ständer zum Einstellen von Zweirädern mit einem Rahmen, der einen ersten, am Ende offenen Radeingriffsschuh (9) aufweist, der schwenkbar um eine seitlich verlaufende Schwenkachse verschwenkbar ist und der einen zweiten Radeingriffsschuh (14) aufweist, der von dem ersten Schuh in der beabsichtigten Bewegungsrichtung des Rades (6) in den Ständer hinein im Abstand angeordnet ist,
dadurch gekennzeichnet, daß jeder Schuh (9, 14) vorstehende im Abstand zueinander angeordnete Seitenwände aufweist, die jeweils Facetten (33) aufweisen, die in der erwähnten beabsichtigten Bewegungsrichtung aufeinanderfolgend von und nach der Längsmittellinie des entsprechenden Schuhes geneigt sind und die außerdem von einer gedachten Vertikalebene weg geneigt sind, die die Längsmittellinie des Schuhes enthält.

2. Ständer nach Anspruch 1, bei welchem die unteren Ränder der Facetten (33) jeder Seitenwand des ersten, am Ende offenen Schuhes (9) relativ zueinander geneigt sind, wobei der untere Rand der in der Bewegungsrichtung vorn liegenden Facette nach unten nach der Schwenkachse geneigt ist und der untere Rand der hinteren Facette nach oben weg von der Schwenkachse geneigt ist.

3. Ständer nach den Ansprüchen 1 oder 2, bei welchem jeder Schuh (9, 14) einen ersten und einen zweiten im Querschnitt U-förmigen Teil aufweist, dessen Seiten von den Facetten definiert werden.

4. Ständer nach Anspruch 3, bei welchem jeder Schuh (9, 14) aus zwei Stahlblechen besteht, von denen ein jedes einen mittleren, allgemein rechteckigen Abschnitt und zwei nach außen von dem rechteckigen Abschnitt verlaufende Abschnitte aufweist, wobei ein Rand eines jeden seitlichen Abschnitts in einem Winkel gegenüber dem rechteckigen Abschnitt geneigt ist und jeder im Querschnitt U-förmige Teil durch Falten des jeweiligen Stahlblechs längs der längeren Seiten des allgemein rechteckigen Abschnitts gebildet ist und die beiden so gebildeten U-förmigen Abschnitte längs ihrer geneigten Ränder miteinander verschweißt sind.

5. Ständer nach einem der Ansprüche 1 bis 4, bei welchem der erste Radeingriffsschuh (9) eine Hülse (23) aufweist, die um einen Stab (22) drehbar ist, welcher am Rahmen festgelegt ist und sich seitlich von diesem erstreckt, wobei der Stab (22) die Schwenkachse für den ersten Radeingriffsschuh definiert.

6. Ständer nach einem der Ansprüche 1 bis 5, bei welchem der zweite Radeingriffsschuh schwenkbar um einen Stab montiert ist, der am Rahmen festgelegt ist und sich seitlich hiervon erstreckt, wobei der Stab eine Schwenkachse für den zweiten Radeingriffsschuh definiert.

7. Ständer nach Anspruch 6, welcher außerdem eine Feder (26) aufweist, die den zweiten Radeingriffsschuh (14) in Berührung mit einem Rad (6) drückt, welches von diesem aufgenommen ist.

8. Ständer nach einem der vorhergehenden Ansprüche, welcher außerdem Seitenstücke (47) aufweist, die sich von der Vorderseite des Ständers nach hinten erstrecken und über der Achse eines von den Radeingriffsschuhen des Ständers aufgenommen Rades liegen, wobei Mittel (48) vorgesehen sind, um das Rad gegenüber den Seitenstücken zu verriegeln.

9. Ständer nach Anspruch 8, bei welchem die Verriegelungsvorrichtung eine seitlich verlaufende Stange (48) aufweist, die an jedem Seitenstück festgelegt ist.

10. Ständer nach einem der Ansprüche 1 bis 7, welcher außerdem am Boden angreifende Räder (50, 51) aufweist, die vorn und hinten am Ständer angeordnet sind.

11. Ständer nach Anspruch 10, welcher außerdem Befestigungsmittel aufweist, um den auf Rädern montierten Ständer mit dem Kabel einer Winde zu verbinden.

## Revendications

1. Support pour un véhicule à roues, le support englobant un cadre possédant un premier sabot à extrémité ouverte (9) destiné à l'insertion d'une roue, monté en pivotement autour d'un axe de pivotement s'étendant en direction latérale et un second sabot (14) destiné à l'insertion d'une roue, espacé dudit premier sabot dans la direction prévue de mouvement d'une roue (6) dans le support, le support étant caractérisé en ce que chaque roue (9, 14) possède des parois latérales dressées, espacées, dont chacune comprend des flancs (33) qui, dans ladite direction de mouvement recherchée, son inclinés de manière séquentielle à l'écart et en direction de la ligne médiane longitudinale du sabot respectif et qui sont également inclinés à l'écart d'un plan vertical hypothétique qui englobe la ligne médiane longitudinale du sabot.

2. Support selon la revendication 1, dans lequel les extrémités inférieures des flancs (33) de chaque paroi latérale dudit premier sabot (9) à extrémité ouverte sont inclinées l'une par rapport à l'autre, l'extrémité inférieure du flanc antérieur dans ladite direction de mouvement étant inclinée vers le bas en direction dudit axe de pivotement et l'extrémité inférieure du flanc arrière étant inclinée vers le haut à l'écart dudit axe de pivotement.

3. Support selon la revendication 1 ou 2, dans lequel chaque sabot (9, 14) comprend des premier et second éléments en forme de profilés en U dont les côtés sont définis par lesdits flancs.

4. Support selon la revendication 3, dans lequel chaque sabot (9, 14) est réalisé à partir d'une paire de tôles en acier possédant chacune une section centrale généralement rectangulaire et deux sections latérales s'étendant vers l'extérieur par rapport à la section rectangulaire, un bord de chaque section latérale étant incliné en formant un angle par rapport à ladite section rectangulaire, chaque élément en forme de profilé en U étant réalisé en pliant la tôle d'acier respective le long des longs côtés de la section généralement rectangulaire et en soudant les deux profilés en U l'un à l'autre le long de leurs bords inclinés.

5. Support selon l'une quelconque des revendications 1 à 4, dans lequel le premier sabot (9) destiné à l'insertion d'une roue englobe un manchon (23) monté à des fins de rotation autour d'une tige (22) fixée au cadre et s'étendant latéralement par rapport à ce dernier, la tige (22) définissant l'axe de pivotement pour le premier sabot destiné à l'insertion d'une roue.

6. Support selon l'une quelconque des revendications 1 à 5, dans lequel le second sabot destiné à l'insertion d'une roue est monté en pivotement autour d'une tige fixée au cadre et s'étendant en direction latérale par rapport à ce dernier, la tige définissant un axe de pivotement pour le second sabot destiné à l'insertion d'une roue.

7. Support selon la revendication 6, comprenant en outre un ressort (26) qui peut être actionné pour presser le second sabot (14) destiné à l'insertion d'une roue, en contact avec une roue (6) saisie dans ce sabot.

8. Support selon l'une quelconque des revendications précédentes, comprenant en outre des pièces latérales (47) qui s'étendent vers l'arrière par rapport au côté frontal du support et qui surplombent l'essieu d'une roue saisie par le sabot du support destiné à l'insertion d'une roue, et des moyens (48) pour bloquer ladite roue contre lesdites pièces latérales.

9. Support selon la revendication 8, dans lequel ledit moyen de blocage comprend une barre (48) s'étendant en direction latérale, fixée à chaque pièce latérale.

10. Support selon l'une quelconque des revendications 1 à 7, comprenant en outre des roues (50, 51) entrant en contact avec le sol fixées à l'avant et à l'arrière du support.

11. Support selon la revendication 10, comprenant un moyen de fixation pour raccorder le support monté sur des roues au câble d'un treuil.
